# EUROPÄISCHE PATENTSCHRIFT

(11) **EP 3 092 085 B1**
(45) Veröffentlichungstag und Bekanntmachung des Hinweises auf die Patenterteilung: **23.11.2022**
(21) Anmeldenummer: 14821646.8
(22) Anmeldetag: 22.12.2014
(51) Int. Cl.: B08B 15/04, B23Q 11/00

(54) **VERFAHREN ZUR SPANABHEBENDEN BEARBEITUNG EINES METALLISCHEN BAUTEILS**
METHOD FOR MACHINING A METAL COMPONENT
MÉTHODE POUR USINER UNE PIÈCE METALLIQUE

(30) Priorität: 09.01.2014 DE 102014200198
(43) Veröffentlichungstag der Anmeldung: 16.11.2016
(73) Patentinhaber: Robert Bosch GmbH, 70442 Stuttgart (DE)
(72) Erfinder: STRAEHLE, Jochen, 71287 Weissach (DE)
(86) Internationale Anmeldenummer: PCT/EP2014/079032
(87) Internationale Veröffentlichungsnummer: WO 2015/104183

(56) Entgegenhaltungen:
- DE-U1- 8 609 919
- DE-U1- 29 623 481
- JP-A- H1 015 774

## Beschreibung

Die Erfindung betrifft ein Verfahren zur spanabhebenden Bearbeitung eines metallischen Bauteils mit einem spanabhebenden Werkzeug zur Bearbeitung einer Oberfläche des metallischen Bauteils, wobei das metallische Bauteil in einer Haltevorrichtung aufgenommen wird.

Das Gebiet der Erfindung erstreckt sich vornehmlich auf die Herstellung von Bauteilen eines Einspritzsystems einer Verbrennungskraftmaschine, insbesondere Bauteile eines Common-Rail-Injektors, wie beispielsweise Ventilnadeln und Ventilsitze. Prinzipiell sind auch andere Anwendungsgebiete denkbar, bei denen metallische Bauteile, die im Betrieb einen Verschleiß ausgesetzt sind, eine verschleißmindernde Bearbeitung erfahren. Dies gilt beispielsweise auch für Wälzlager.

### Stand der Technik

In Common-Rail-Injektoren entstehen durch hohe Drücke und Temperaturen verschleißbehaftete Reibkontakte. Der Verschleiß kann im fortschreitenden Stadium zu Driften in der Einspritzmenge führen und damit unter Umständen zum Überschreiten von Emissionsgrenzwerten. Als Abhilfemaßnahmen gegen den Verschleiß dienen insbesondere diamantartige Schutzschichten aus Kohlenstoff mit denen die Oberflächen, die einem verstärkten Verschleiß ausgesetzt sind beschichtet werden. Diese Beschichtungen sind jedoch relativ kostenintensiv und aufwendig.

Die EP 0 958 092 B1 offenbart eine Fräseinrichtung zum Befräsen eines Schweißbereichs von durch einen Elektrodenhalter gehaltenen Punkt-Schweiß-Elektroden. Die Fräseinrichtung umfasst einen Werkzeugträger für mindestens ein darin um eine Werkzeugdrehachse drehbar lagerbares Fräswerkzeug und Drehantriebsmitteln für dieses Fräswerkzeug. Das Fräswerkzeug ist mit mindestens einer zur Werkzeugdrehachse im Wesentlichen konzentrischen, konkaven Aufnahmepfanne für die Aufnahme des Schweißbereichs der jeweiligen Punkt-Schweiß-Elektrode und mit jeweils einer Gruppe von Fräskanten im Bereich dieser mindestens einen Aufnahmepfanne zum Befräsen des jeweiligen Schweißbereichs ausgeführt. Ferner sind Absaugmittel zum Absaugen von während des Befräsens erzeugten Spänen angeordnet. Durch Unterdruckerzeugungsmittel werden die beim Befräsen von Punkt-Schweiß-Elektroden erzeugten Frässpäne von einer durch eine Unterdruckpumpe erzeugte Saugwirkung aus dem Bereich des Fräswerkzeugs über einen Absaugkanal durch eine Öffnung und die Pumpe abgesaugt und können beispielsweise in einen Sammelbehälter abgegeben werden.

Die Unterdruckpumpe kann aus jedem für derartige Anwendungen geeigneten Typ bestehen. Es werden jedoch derartige Unterdruckpumpen bevorzugt, die einen Unterdruck unter Verwendung des Coanda-Effekts oder des Bernoulli-Effekts erzeugen. Dies liegt daran, dass derartige Pumpen den Unterdruck nicht durch mechanische Bewegung von Kolben oder rotierender Teile erzeugen, deren Betrieb bei Eintreten von gepumpten Spänen oder dergleichen beeinträchtigt wäre. Vielmehr wird der Unterdruck durch Strömung eines Mediums, insbesondere eines Gases oder einer Flüssigkeit, erzeugt, auf welches das Eintreten von Spänen in eine Pumpenkammer keine nachteilhafte Einwirkung ausübt. Es ist somit möglich, die beim Befräsen erzeugten Späne vom Fräswerkzeug wegzuführen, so dass einerseits der Fräsvorgang selbst durch herumwirbelnde Späne nicht nachteilhaft beeinflusst wird und andererseits die Späne nicht in Baukomponenten der Fräseinrichtung eindringen können und diese beschädigen können.

Somit geht aus der Druckschrift zwar eine Fräseinrichtung mit Unterdruckerzeugungsmittel hervor, jedoch besteht die Aufgabe der Unterdruckerzeugungsmittel darin, die beim Befräsen von Punkt-Schweiß-Elektroden erzeugten Frässpäne durch die Saugwirkung der Unterdruckerzeugungsmittel aus dem Bereich des Fräswerkzeugs über einen Absaugkanal abzusaugen.

Die Druckschriften JP 10-015774, DE 86 09 919 U1 und DE 296 23 481 U1 offenbaren ebenfalls Absaugvorrichtungen für Späne, die beim Bearbeiten eines Werkstücks mit einem Werkzeug entstehen.

### Offenbarung der Erfindung

Es ist daher die Aufgabe der vorliegenden Erfindung ein Verfahren zur spanabhebenden Bearbeitung eines metallischen Bauteils bereitzustellen, welches die Bearbeitung einer Verschleiß ausgesetzten Oberfläche des metallischen Bauteils erlaubt, um den Verschleiß an der Oberfläche ohne das Aufbringen einer Beschichtung zu senken.

Die Aufgabe wird ausgehend von einem Verfahren gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß wird ein geschlossenes, unterdrucktaugliches Gehäuse zur Aufnahme mindestens eines Teils der zu bearbeitenden Oberfläche des metallischen Bauteils angeordnet, wobei das unterdrucktaugliche Gehäuse fluidtechnisch mit mindestens einem Unterdruckerzeugungsmittel zur Erzeugung einer sauerstoffarmen Umgebung in dem unterdrucktauglichen Gehäuse verbunden wird. Mit anderen Worten wird das metallische Bauteil komplett oder teilweise im geschlossenen, unterdrucktauglichen Gehäuse angeordnet.

Dazu ist vorzugsweise eine fluidführende Leitung zwischen dem unterdrucktauglichen Gehäuse und dem mindestens einen Unterdruckerzeugungsmittel angeordnet. Das metallische Bauteil ist insbesondere ein Eisenbasiswerkstoff. Die Erzeugung eines Unterdrucks innerhalb des unterdrucktauglichen Gehäuses senkt den Sauerstoffgehalt der Luft innerhalb des unterdrucktauglichen Gehäuses und vermindert die Bildung des Hauptoxids Fe₂O₃. Stattdessen wird das verschleißmindernde Oxid Fe₃O₄ verstärkt gebildet, welches eine geringere Sprödigkeit und Härte als das Hauptoxid Fe₂O₃ aufweist. Dadurch wird der Reibkoeffizient verringert und der Verschleiß an der Oberfläche des metallischen Bauteils minimiert. Je nach Bauteil und Anwendung des Bauteils können alternativ zur gesamten Oberfläche des Bauteils auch nur lokal begrenzte Oberflächen einem relativ hohen Verschleiß ausgesetzt sein, so dass eine lokal begrenzte Bearbeitung der Oberfläche durch eine lokal begrenzte Ausbildung des unterdrucktauglichen Gehäuses um die zu bearbeitende Oberfläche des metallischen Bauteils vorteilhaft ist.

Die Erfindung schließt die technische Lehre ein, dass ein Druck innerhalb des unterdrucktauglichen Gehäuses höchstens 10⁻³ bar beträgt. Ein Druck, der größer als 10⁻³ bar ist, könnte die Ausbildung des Hauptoxids Fe₂O₃ fördern, sodass ein zu geringer Anteil an dem verschleißmindernden Oxid Fe₃O₄ gebildet wird.

Vorzugsweise beträgt der Druck innerhalb des unterdrucktauglichen Gehäuses jedoch mindestens 10⁻⁶ bar. Ein Druck, der unter 10⁻⁶ bar sinkt, könnte die Ausbildung des verschleißmindernden Oxids Fe₃O₄ mangels genügend Sauerstoffmenge hindern. Eine fehlende Ausbildung einer Oxidschicht führt zu einer Erhöhung des Adhäsionsverschleißes und ist somit nicht gewollt.

Mithin besteht der Vorteil eines Druckbereichs zwischen 10⁻³ bar und 10⁻⁶ bar in der Bildung des verschleißmindernden Oxides Fe₃O₄ in ausreichender Menge.

Gemäß einer bevorzugten Ausführungsform ist das unterdrucktaugliche Gehäuse zumindest teilweise um die Haltevorrichtung und/oder zumindest teilweise um das spanabhebende Werkzeug angeordnet.

Mit anderen Worten ist das unterdrucktaugliche Gehäuse um die gesamte Haltevorrichtung und um das gesamte spanabhebende Werkzeug angeordnet oder um die gesamte Haltevorrichtung und um einen Teil des spanabhebenden Werkzeugs angeordnet.

Es ist jedoch auch denkbar, dass das unterdrucktaugliche Gehäuse um einen Teil der Haltevorrichtung und um das gesamte spanabhebende Werkzeug angeordnet ist oder, dass das unterdrucktaugliche Gehäuse um einen Teil der Haltevorrichtung und um einen Teil des spanabhebenden Werkzeugs angeordnet ist.

Bei einer Ausbildung des unterdrucktauglichen Gehäuses um die Haltevorrichtung und teilweise um das spanabhebende Werkzeug gestaltet sich die Abdichtung gegenüber der Ausführungsform eines unterdrucktauglichen Gehäuses das das gesamte metallische Bauteil mit Haltevorrichtung und das gesamte spanabhebende Werkzeug umgibt etwas komplexer. Jedoch ist bei einem dementsprechend großen unterdrucktauglichen Gehäuse das Luftvolumen ebenfalls größer, wodurch die Erzeugung des Unterdrucks mehr Zeit in Anspruch nimmt. Ferner ist das Auf- und Abrüsten des metallischen Bauteils bei dem großen unterdrucktauglichen Gehäuse einfacher zu bewältigen als bei dem nur teilweise um das spanabhebende Werkzeug und um das metallische Bauteil angeordnete unterdrucktaugliche Gehäuses.

Um das unterdrucktaugliche Gehäuse noch kleiner auszubilden und somit das Luftvolumen noch geringer zu gestalten, ist es auch denkbar, dass das unterdrucktaugliche Gehäuse nur um den Teil des metallischen Bauteils ausgebildet ist der mit dem spanabhebenden Werkzeug zum Zeitpunkt der Bearbeitung in Berührung steht. Somit ist es sinnvoll, dass das metallische Bauteil zur Bearbeitung durch das unterdrucktaugliche Gehäuse geschoben wird, wobei zur Abdichtung eine dynamische Dichtung zwischen dem unterdrucktauglichen Gehäuse und dem metallischen Bauteil angeordnet ist.

Vorzugsweise ist das unterdrucktaugliche Gehäuse eine Vakuumglocke. Die Vakuumglocke ist gemäß einem vorteilhaften Ausführungsbeispiel aus Glas ausgebildet und über eine Silikonpaste oder ein Dichtelement abgedichtet.

Besonders bevorzugt ist, dass das unterdrucktaugliche Gehäuse mindestens ein Dichtungselement zur fluidischen Abdichtung umfasst. Es ist aber auch denkbar, das gesamte unterdrucktaugliche Gehäuse aus einem Dichtungselement, wie beispielsweise einem zumindest teilweise verstärkten Polymer, beispielsweise ein Elastomer, oder Kautschuk auszubilden.

Gemäß einem bevorzugten Ausführungsbeispiel ist das mindestens eine Dichtungselement zwischen der Oberfläche des metallischen Bauteils und dem unterdrucktauglichen Gehäuse angeordnet und die Oberfläche des metallischen Bauteils gegen das unterdrucktaugliche Gehäuse abdichtet.

Ebenso ist es auch vorteilhaft, dass das mindestens eine Dichtungselement zumindest teilweise um die Haltevorrichtung und/oder zumindest teilweise um das spanabhebende Werkzeug angeordnet ist, sodass die Haltevorrichtung und das spanabhebende Werkzeug gegen das unterdrucktaugliche Gehäuse abdichtet.

Des Weiteren bevorzugt ist, dass das mindestens eine Unterdruckerzeugungsmittel eine Vakuumpumpe und/oder eine Wasserstrahlpumpe und/oder eine Turbomolekularpumpe umfasst. Dies bedeutet, dass entweder die mindestens eine Vakuumpumpe oder die mindestens eine Wasserstrahlpumpe oder die mindestens eine Turbomolekularpumpe oder eine Mischung aus mehreren der drei Pumpen als mindestens ein Unterdruckerzeugungsmittel verwendbar ist. Je nach Größe des einzustellenden Unterdrucks und Luftvolumen kann entweder ein Unterdruckerzeugungsmittel aber auch mehrere Unterdruckerzeugungsmittel verwendet werden.

Ganz allgemein ist unter dem mindestens einen Unterdruckerzeugungsmittel eine Einheit zu verstehen, die dazu geeignet ist, einen Unterdruck in dem unterdrucktauglichen Gehäuse zu erzeugen. Dies kann beispielsweise auch über eine Aufheizung der Luft in dem unterdrucktauglichen Gehäuse geschehen. Eine Aufheizung der Luft führt nämlich zu einer Expansion der Luft. Über ein Rückschlagventil kann die expandierte Luft entweichen, sodass bei einer Abkühlung der Luft in dem unterdrucktauglichen Gehäuse ein Unterdruck gebildet wird.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigen:
- Figur 1: eine perspektivische Ansicht einer erfindungsgemäßen Vorrichtung zur spanabhebenden Bearbeitung eines metallischen Bauteils mit einem unterdrucktauglichen Gehäuse,
- Figur 2: eine Schnittansicht einer erfindungsgemäßen Vorrichtung zur spanabhebenden Bearbeitung eines metallischen Bauteils mit einem unterdrucktauglichen Gehäuse gemäß einem zweiten Ausführungsbeispiel, und
- Figur 3: eine Schnittansicht einer erfindungsgemäßen Vorrichtung zur spanabhebenden Bearbeitung eines metallischen Bauteils mit einem unterdrucktauglichen Gehäuse gemäß einem dritten Ausführungsbeispiel.

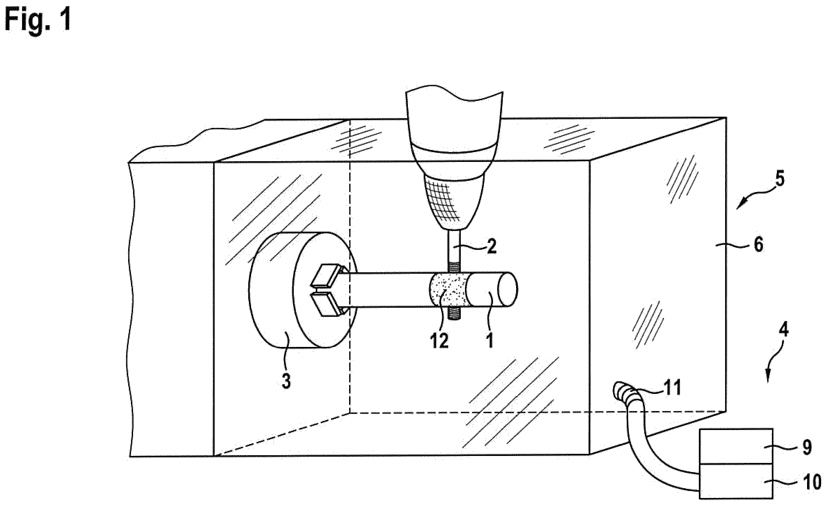

Nach Figur 1 umfasst die Vorrichtung zur spanabhebenden Bearbeitung eines metallischen Bauteils 1 ein spanabhebendes Werkzeug 2 zur Bearbeitung einer Oberfläche des metallischen Bauteils 1 und eine Haltevorrichtung 3 zur Aufnahme des metallischen Bauteils 1. Darüber hinaus ist über eine fluidführende Leitung 11 ein Unterdruckerzeugungsmittel 4 mit einem unterdrucktauglichen Gehäuse 5, welches als Vakuumglocke 6 ausgebildet ist, fluidtechnisch verbunden. In dem unterdrucktauglichen Gehäuse 5 sind das spanabhebende Werkzeug 2 sowie die Haltevorrichtung 3 samt metallischem Bauteil 1 angeordnet. Das Unterdruckerzeugungsmittel 4 umfasst eine Wasserstrahlpumpe 9 und eine Turbomolekularpumpe 10, die je nach benötigtem Druck in dem unterdrucktauglichen Gehäuse 5 betrieben werden.

Dabei dient in diesem Ausführungsbeispiel die Wasserstrahlpumpe 9 im Wesentlichen zur Erzeugung eines relativ geringen Drucks, von bis zu 10⁻³ bar, und die Turbomolekularpumpe 10 im Wesentlichen zur Erzeugung eines tieferen Drucks bis zu 10⁻⁶ bar. Aufgrund der durch den Unterdruck erzeugten sauerstoffarmen Umgebung in dem unterdrucktauglichen Gehäuse 5 bildet sich bei der spanabhebenden Bearbeitung des metallischen Bauteils 1 eine verschleißmindernde Oxidschicht Fe₃O₄ 12.

Mithin beträgt ein Druck innerhalb des unterdrucktauglichen Gehäuses 5 höchstens 10⁻³ bar jedoch mindestens 10⁻⁶ bar. Ein Druck, der größer als 10⁻³ bar ist, könnte die Ausbildung des Hauptoxids Fe₂O₃fördern, sodass ein zu geringer Anteil an dem verschleißmindernden Oxid Fe₃O₄ gebildet wird. Ein Druck, der geringer als 10⁻⁶ bar ist, könnte die Ausbildung des verschleißmindernden Oxids Fe₃O₄ mangels genügend Sauerstoffmenge hindern. Eine fehlende Ausbildung einer Oxidschicht führt zu einer Erhöhung des Adhäsionsverschleißes und ist somit nicht gewollt. Daher besteht der Vorteil eines Druckbereichs zwischen 10⁻³ bar und 10⁻⁶ bar in der Bildung des verschleißmindernden Oxides Fe₃O₄ in ausreichender Menge.

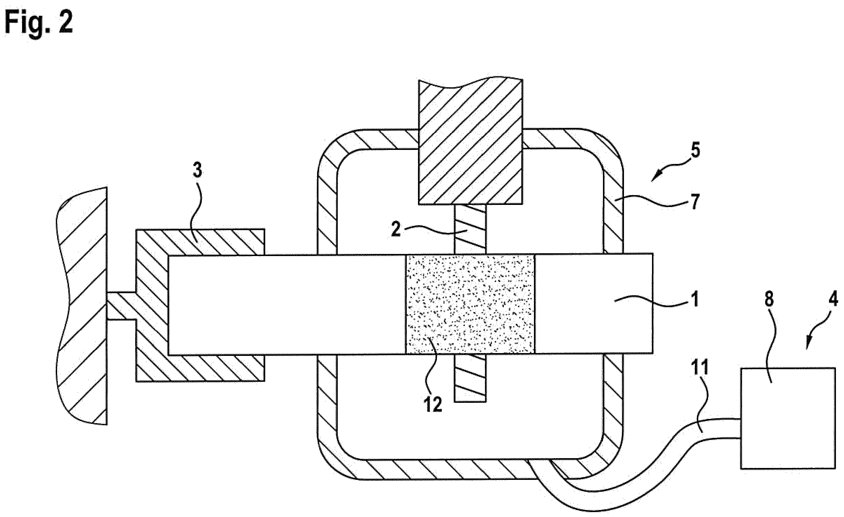

Gemäß Figur 2 ist das unterdrucktaugliche Gehäuse 5 um die zu bearbeitende Oberfläche des metallischen Bauteils 1 angeordnet. Dabei ist das unterdrucktaugliche Gehäuse 5 über die fluidführende Leitung 11 fluidtechnisch mit dem mindestens einen Unterdruckerzeugungsmittel 4, das eine Vakuumpumpe 8 umfasst, zur Erzeugung einer sauerstoffarmen Umgebung in dem unterdrucktauglichen Gehäuse 5 verbunden. Im Wesentlichen ist das unterdrucktaugliche Gehäuse 5 aus einem Dichtungselement 7 zur fluidischen Abdichtung ausgebildet. Mit anderen Worten ist das gesamte unterdrucktaugliche Gehäuse 5 ein Dichtungselement. Dies besteht aus einem Polymer und erlaubt die Bildung eines Unterdrucks um die zu bearbeitende Oberfläche. Zur fluidischen Abdichtung kann das unterdrucktaugliche Gehäuse 5 jedoch auch nur teilweise aus dem Dichtungselement 7 ausgebildet sein. Alternativ dazu ist es aber auch denkbar, dass das Dichtungselement 7 zwischen der Oberfläche des metallischen Bauteils 1 und dem unterdrucktauglichen Gehäuse 5 angeordnet ist und die Oberfläche des metallischen Bauteils 1 gegen das unterdrucktaugliche Gehäuse 5 abdichtet. Somit ist die Ausbildung der verschleißmindernde Oxidschicht Fe₃O₄ 12 lokal eingegrenzt.

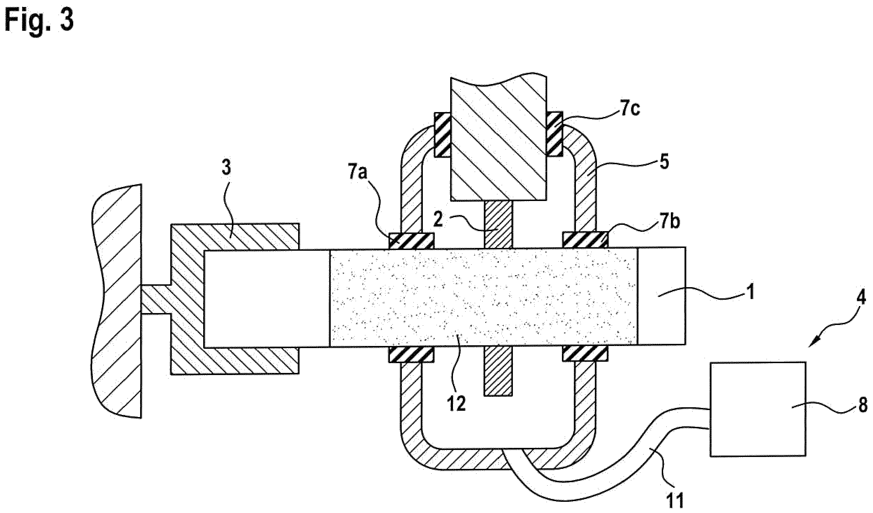

In Figur 3 ist das unterdrucktaugliche Gehäuse 5 noch kleiner ausgebildet als in Figur 2 und somit ist auch das Luftvolumen des unterdrucktauglichen Gehäuses 5 noch geringer. Zur Erzeugung eines Unterdrucks benötigt die Vakuumpumpe 8 somit weniger Zeit und auch weniger Energie. Das unterdrucktaugliche Gehäuse 5 ist nämlich nur um den Teil des metallischen Bauteils 1 ausgebildet, der mit dem spanabhebenden Werkzeug 2 zum Zeitpunkt der Bearbeitung in Berührung steht. Zur Bearbeitung wird das metallische Bauteil 1 durch das unterdrucktaugliche Gehäuse 5 geschoben. Ein erstes und ein zweites Dichtungselement 7a und 7b sind zwischen der Oberfläche des metallischen Bauteils 1 und dem unterdrucktauglichen Gehäuse 5 angeordnet, so dass die Oberfläche des metallischen Bauteils 1 gegen das unterdrucktaugliche Gehäuse 5 abdichtet. Ferner ist ein drittes Dichtungselement 7c das spanabhebende Werkzeug 2 angeordnet, sodass das spanabhebende Werkzeug 2 gegen das unterdrucktaugliche Gehäuse 5 abdichtet ist. Die drei Dichtungselement 7a, 7b, 7c sind vorzugsweise als dynamische Dichtungselemente ausgebildet, wodurch eine Relativbewegung zwischen dem jeweiligen Dichtungselement und dem abzudichtendem Bauteil gewährleistet ist.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, dass das Unterdruckerzeugungsmittel eine Vakuumpumpe und/oder eine Wasserstrahlpumpe und/oder eine Turbomolekularpumpe umfasst. Dies bedeutet, dass entweder die Vakuumpumpe oder die Wasserstrahlpumpe oder die Turbomolekularpumpe oder eine Mischung aus den drei Pumpen als Unterdruckerzeugungsmittel verwendbar ist. Darüber hinaus sind aber auch andere Mittel zum Erzeugen eines Unterdrucks möglich. Ebenso ist es auch denkbar, dass das ein Dichtungselement zumindest teilweise um die Haltevorrichtung angeordnet ist, so dass die Haltevorrichtung gegen das unterdrucktaugliche Gehäuse abdichtet ist.

## Patentansprüche

1. Verfahren zur spanabhebenden Bearbeitung eines metallischen Bauteils (1) mit einem spanabhebenden Werkzeug (2) zur Bearbeitung einer Oberfläche des metallischen Bauteils (1), wobei das metallische Bauteil (1) in einer Haltevorrichtung (3) aufgenommen wird,, wobei ein geschlossenes, unterdrucktaugliches Gehäuse (5) zur Aufnahme mindestens eines Teils der zu bearbeitenden Oberfläche des metallischen Bauteils (1) angeordnet wird, wobei das unterdrucktaugliche Gehäuse (5) fluidtechnisch mit mindestens einem Unterdruckerzeugungsmittel (4) zur Erzeugung einer sauerstoffarmen Umgebung in dem unterdrucktauglichen Gehäuse (5) verbunden wird, **dadurch gekennzeichnet, dass** ein Druck innerhalb des unterdrucktauglichen Gehäuses (5) zwischen höchstens 10⁻³ bar und mindestens 10⁻⁶ bar eingestellt wird.

2. Verfahren nach Anspruch 1,
**dadurch gekennzeichnet, dass** das unterdrucktaugliche Gehäuse (5) zumindest teilweise um die Haltevorrichtung (3) und/oder zumindest teilweise um das spanabhebende Werkzeug (2) angeordnet wird.

3. Verfahren nach einem der vorherigen Ansprüche,
**dadurch gekennzeichnet, dass** das unterdrucktaugliche Gehäuse (5) als eine Vakuumglocke (6) ausgebildet wird.

4. Verfahren nach einem der vorherigen Ansprüche,
**dadurch gekennzeichnet, dass** das unterdrucktaugliche Gehäuse (5) mindestens ein Dichtungselement (7) zur fluidischen Abdichtung umfasst.

5. Verfahren nach Anspruch 4,
**dadurch gekennzeichnet, dass** das mindestens eine Dichtungselement (7) zwischen der Oberfläche des metallischen Bauteils (1) und dem unterdrucktauglichen Gehäuse (5) angeordnet wird und die Oberfläche des metallischen Bauteils (1) gegen das unterdrucktaugliche Gehäuse (5) abdichtet.

6. Verfahren nach einem der vorherigen Ansprüche,
**dadurch gekennzeichnet, dass** das mindestens eine Unterdruckerzeugungsmittel (4) eine Vakuumpumpe (8) umfasst.

7. Verfahren nach einem der vorherigen Ansprüche,
**dadurch gekennzeichnet, dass** das mindestens eine Unterdruckerzeugungsmittel (4) eine Wasserstrahlpumpe (9) umfasst.

8. Verfahren nach einem der vorherigen Ansprüche,
**dadurch gekennzeichnet, dass** das mindestens eine Unterdruckerzeugungsmittel (4) eine Turbomolekularpumpe (10) umfasst.

## Claims

1. Method for machining a metallic component (1) with a machining tool (2) for machining a surface of the metallic component (1), wherein the metallic component (1) is received in a holding apparatus (3), wherein a closed housing (5) suitable for vacuum is arranged for receiving at least a part of the surface to be machined of the metallic component (1), wherein the housing (5) suitable for vacuum is connected fluidically to at least one vacuum-generating means (4) for generating a low-oxygen environment in the housing (5) suitable for vacuum, **characterized in that** a pressure within the housing (5) suitable for vacuum of between at most 10⁻³ bar and at least 10⁻⁶ bar is set.

2. Method according to Claim 1,
**characterized in that** the housing (5) suitable for vacuum is arranged at least partially around the holding apparatus (3) and/or at least partially around the machining tool (2).

3. Method according to either of the preceding claims, **characterized in that** the housing (5) suitable for vacuum is designed as a vacuum bell jar (6).

4. Method according to one of the preceding claims, **characterized in that** the housing (5) suitable for vacuum comprises at least one seal element (7) for fluidic sealing.

5. Method according to Claim 4,
**characterized in that** the at least one seal element (7) is arranged between the surface of the metallic component (1) and the housing (5) suitable for vacuum and seals off the surface of the metallic component (1) with respect to the housing (5) suitable for vacuum.

6. Method according to one of the preceding claims, **characterized in that** the at least one vacuum-generating means (4) comprises a vacuum pump (8).

7. Method according to one of the preceding claims, **characterized in that** the at least one vacuum-generating means (4) comprises a water-jet pump (9).

8. Method according to one of the preceding claims, **characterized in that** the at least one vacuum-generating means (4) comprises a turbomolecular pump (10) .

## Revendications

1. Procédé de traitement par usinage d'une pièce métallique (1) à l'aide d'un outil d'usinage (2) destiné à traiter une surface de la pièce métallique (1), la pièce métallique (1) étant reçue dans un dispositif de retenue (3), un boîtier fermé (5) approprié aux pressions négatives étant disposé de manière à recevoir au moins une partie de la surface à traiter de la pièce métallique (1), le boîtier (5) approprié aux pressions négatives étant relié fluidiquement à au moins un moyen de génération de pressions négatives (4) destiné à générer un environnement pauvre en oxygène dans le boîtier (5) approprié aux pressions négatives, **caractérisé en ce qu'**une pression à l'intérieur du boîtier (5) approprié aux pressions négatives est réglée entre au plus 10⁻³ bar et au moins 10⁻⁶ bar.

2. Procédé selon la revendication 1, **caractérisé en ce que** le boîtier (5) approprié aux pressions négatives est disposé au moins en partie autour du dispositif de retenue (3) et/ou au moins en partie autour de l'outil d'usinage (2).

3. Procédé selon l'une des revendications précédentes, **caractérisé en ce que** le boîtier (5) approprié aux pressions négatives est conçu sous la forme d'une cloche à vide (6).

4. Procédé selon l'une des revendications précédentes, **caractérisé en ce que** le boîtier (5) approprié aux pressions négatives comprend au moins un élément d'étanchéité (7) destiné à réaliser l'étanchéité fluidique.

5. Procédé selon la revendication 4, **caractérisé en ce que** l'au moins un élément d'étanchéité (7) est disposé entre la surface de la pièce métallique (1) et le boîtier (5) approprié aux pressions négatives et réalise l'étanchéité de la surface de la pièce métallique (1) par rapport au boîtier (5) approprié aux pressions négatives.

6. Procédé selon l'une des revendications précédentes, **caractérisé en ce que** l'au moins un moyen de génération de pressions négatives (4) comprend une pompe à vide (8).

7. Procédé selon l'une des revendications précédentes, **caractérisé en ce que** l'au moins un moyen de génération de pressions négatives (4) comprend une pompe à jet d'eau (9).

8. Procédé selon l'une des revendications précédentes, **caractérisé en ce que** l'au moins un moyen de génération de pressions négatives (4) comprend une pompe turbomoléculaire (10).
